# EUROPÄISCHE PATENTSCHRIFT

(11) **EP 3 233 375 B1**
(45) Veröffentlichungstag und Bekanntmachung des Hinweises auf die Patenterteilung: **19.06.2019**
(21) Anmeldenummer: 15813350.4
(22) Anmeldetag: 16.12.2015
(51) Int. Cl.: B25B 11/00, B23Q 3/06

(54) **AUFNAHME FÜR EINEN KOLBEN EINES VERBRENNUNGSMOTORS ZUR BEARBEITUNG DES KOLBENS SOWIE VERWENDUNG DER AUFNAHME**
HOLDER FOR A PISTON OF AN INTERNAL COMBUSTION ENGINE USED FOR MACHINING THE PISTON, AND USE OF SAID HOLDER
LOGEMENT DESTINÉ À UN PISTON D'UN MOTEUR À COMBUSTION INTERNE POUR USINER LE PISTON ET UTILISATION DU LOGEMENT

(30) Priorität: 16.12.2014 DE 102014226058
(43) Veröffentlichungstag der Anmeldung: 25.10.2017
(73) Patentinhaber: Federal-Mogul Nürnberg GmbH, 90441 Nürnberg (DE)
(72) Erfinder: FRÖDE, Kay, 90547 Stein (DE)
(74) Vertreter: Hoffmann Eitle
(86) Internationale Anmeldenummer: PCT/EP2015/080001
(87) Internationale Veröffentlichungsnummer: WO 2016/096991

(56) Entgegenhaltungen:
- EP-A1- 1 884 303
- EP-A2- 0 800 884
- DE-A1- 3 543 353
- DE-A1- 3 812 155
- DE-A1-102004 009 023
- US-A1- 2003 222 388

## Beschreibung

### TECHNISCHES GEBIET

Die Erfindung betrifft eine **Kombination eines Kolbens für einen Verbrennungsmotor mit einer** Aufnahme für den Kolben zur Bearbeitung des Kolbens sowie eine Verwendung der Aufnahme. Eine entsprechende Kombination und eine entsprechende Verwendung sind beispielsweise in DE 10 2004 009 023 A1 offenbart.

Kolben für Verbrennungsmotoren werden zumeist gegossen oder geschmiedet, so dass zunächst ein Rohling hergestellt wird. Dieser Rohling muss umfangreich mit Drehoperationen bearbeitet werden. Beispielsweise werden die Kolbenringnuten im Rahmen des sogenannten "Nutenstechens" durch eine Drehoperation ausgebildet. Ferner findet üblicherweise eine Bearbeitung der Brennraummulde statt. Für diese Bearbeitungsoperationen muss der Kolben definiert in den entsprechenden Maschinen aufgenommen und angeordnet werden. Eine definierte Anordnung ist darüber hinaus für spätere Vermessungsoperationen notwendig. Schließlich sind die während der beschriebenen Bearbeitung auftretenden Kräfte aufzunehmen.

### STAND DER TECHNIK

Um den Kolbenrohling definiert anordnen zu können, wird üblicherweise an dessen (vom Kolbenboden entfernt liegenden) Unterseite eine Drehoperation vorgenommen, um definierte Auflageflächen zu schaffen, mit denen der Kolbenrohling auf einem Positionierungskörper aufliegt, der üblicherweise als im Wesentlichen kreisrunde "Scheibe" gestaltet ist und nahezu den Durchmesser des Kolbenrohlings aufweist. Im Bereich der Schaftwände des Kolbens liegt somit infolge der Drehoperation an dem Kolbenrohling eine Art Stufe vor, an der zur Kolbenachse hin die Schaftwand in Richtung des Kolbenbodens zurückgesetzt ist, so dass mittels der zurückgesetzten teilringförmigen Fläche an den Schaftwänden eine definierte Anordnung auf dem beschriebenen Positionierungskörper erfolgen kann.

Die Gestaltung von Kolben im Einzelnen unterliegt jedoch zahlreichen Rahmenbedingungen, die beispielsweise wegen Umweltauflagen und Gewichtsbeschränkungen zu immer schmäleren Schaftwänden führen. Derartige, deutlich schmälere Schaftwände stellen an die Aufnahme zur Bearbeitung des Kolbens besondere Herausforderungen, da die Winkel (in einer Ebene senkrecht zur Kolbenachse), über welche der Kolben auf dem Positionierungskörper aufliegt, immer kleiner werden, und damit die Gefahr besteht, dass bestimmte Toleranzen im Hinblick auf die Koaxialität zwischen Kolben und Kolbenaufnahme nicht mehr eingehalten werden können. Eine Folge wären somit außerhalb der Toleranz liegende Bearbeitungsschritte.

Die US 7,402,231 B2 betrifft eine Hängeranordnung zum hängenden Halten eines Kolbens während eines Beschichtungsvorgangs. Eine ähnliche Haltevorrichtung geht aus der DE 10 2005 041 404 A1 hervor.

Die US 7,036,810 B2 und die DE 42 02 989 C2 betreffen modulare Aufnahmen für beliebige Werkstücke.

### DARSTELLUNG DER ERFINDUNG

Der Erfindung liegt somit die Aufgabe zugrunde, eine **Kombination eines Kolbens für einen Verbrennungsmotor mit einer** Aufnahme für den Kolben zur Bearbeitung des Kolbens zu schaffen, die, insbesondere im Hinblick auf immer schmäler werdende Schaftwände, besonders flexibel ist.

Die Lösung dieser Aufgabe erfolgt durch die im Patentanspruch 1 beschriebene Kombination sowie durch die in Anspruch 10 beschriebene Verwendung.

Demzufolge weist die hierin beschriebene Aufnahme für einen Kolben eines Verbrennungsmotors zur Bearbeitung des Kolbens zumindest zwei Positionierungskörper auf, die für das Zusammenwirken mit Flächen an dem Kolben angepasst sind, und von denen zumindest einer eine senkrecht zur Kolbenachse verlaufende Abmessung aufweist, die kleiner ist als der Radius des zu bearbeitenden Kolbens. Mit anderen Worten wird der üblicherweise einzige, nahezu den Durchmesser des Kolbens aufweisende Positionierungskörper in zumindest zwei Positionierungskörper geteilt, die entsprechend kleinere Abmessungen aufweisen und bevorzugt weiterhin in einer Ebene liegen. Beispielsweise können zwei wiederum kreisrunde Positionierungskörper vorgesehen sein, jeweils einer im Bereich jeder Schaftwand, so dass im Bereich jeder Schaftwand infolge des deutlich kleineren Radius des Positionierungskörper ein ausreichend großer Winkel realisiert werden kann, über den der zu bearbeitende Kolben auf dem Positionierungskörper aufliegt. Die Abmessung des Positionierungskörpers, die kleiner ist als der Radius des Kolbens, ist bei einem im Wesentlichen kreisrunden Positionierungskörper sein Durchmesser. Im Fall eines ovalen Positionierungskörpers wird diese Abmessung beispielsweise durch die kürzere Hauptachse gebildet, wobei bevorzugt auch die längere Hauptachse kleiner sein kann als der Radius des zu bearbeitenden Kolbens.

Darüber hinaus ergibt sich der wesentliche Vorteil, dass sich der Kolben während der Bearbeitung nicht mehr um die Kolbenachse verdrehen kann. Ferner bleibt das bewährte Grundprinzip der Kolbenaufnahme zu dessen Bearbeitung erhalten, so dass vorhandene Fertigungsanlagen nur geringfügig umgestellt werden müssen. Im Hinblick auf die herzustellenden Kolben wird es in vorteilhafter Weise möglich, mit immer schmäleren Schaftwänden innerhalb der notwendigen Toleranzen zu fertigen.

Es sei bereits an dieser Stelle erwähnt, dass die einzelnen Positionierungskörper nicht nur kreisrund gestaltet sein können, sondern beispielsweise oval. Ferner können an einer oder beiden Schaftwänden mehr als ein Positionierungskörper vorgesehen sein, und der oder die an der jeweiligen Schaftwand vorgesehene Positionierungskörper kann sich von dem- oder denjenigen an der gegenüberliegenden Schaftwand unterscheiden. An die Positionierungskörper wird lediglich die Anforderung gestellt, in einer Ebene senkrecht zur Kolbenachse eine definierte Auflagefläche aufzuweisen, die kreis-, kreisring-, oder segmentförmig sein kann, und senkrecht hierzu, also im Wesentlichen parallel zur Kolbenachse eine Anschlagfläche aufzuweisen, um ein Verschieben und/oder Verdrehen des Kolbens bezüglich der Aufnahme zu verhindern. Die beschriebene Aufnahme ist für die Aufnahme eines Kolbens bei einer Drehbearbeitung, insbesondere dem sogenannten "Nutenstechen", sowie bei Bearbeitung der Brennraummulde vorgesehen und geeignet. Insbesondere wird der Kolben hierdurch definiert in den entsprechenden Maschinen aufgenommen und angeordnet, und es werden die während der beschriebenen Bearbeitung auftretenden Kräfte aufgenommen.

Bevorzugte Weiterbildungen der erfindungsgemäßen Kombination sind in den weiteren Ansprüchen beschrieben.

Für den oder die Positionierungskörper bietet es in bestimmten Anwendungsfällen Vorteile, wenn dieser fest mit einem Träger verbunden, bevorzugt sogar integral oder einstückig mit dem Träger ausgebildet ist. In diesem Fall werden Positionierungsfehler des Positionierungskörpers bezüglich des Trägers vermieden.

Im Hinblick auf die Flexibilität ist es jedoch vorteilhaft, wenn zumindest ein Positionierungskörper von einem Träger lösbar ist. In diesem Fall müssen nur die austauschbaren Positionierungskörper, beispielsweise durch Drehoperationen gefertigt werden, und ein flexibel für die Aufnahme unterschiedlicher Positionierungskörper ausgebildeter Träger kann für zahlreiche unterschiedliche Kolben eingesetzt werden. Hierdurch können ferner die Rüstzeiten optimiert werden, da lediglich die vergleichsweise kleinen Positionierungskörper ausgetauscht werden müssen.

In diesem Fall bietet es ferner Vorteile, wenn der Träger mehr Aufnahmeeinrichtungen, beispielsweise Öffnungen, zur Aufnahme von Positionierungskörpern aufweist als Positionierungskörper vorgesehen sind. Mit anderen Worten können zahlreiche vorhandene Aufnahmeeinrichtungen in flexibler Art und Weise für unterschiedliche Arten und Anzahlen von Positionierungskörpern genutzt werden.

Für eine besonders stabile Aufnahme des Kolbens bietet es ferner Vorteile, wenn die Höhe (in Richtung der Kolbenachse) der Positionierungskörper (zumindest ein Positionierungskörper) flexibel zu wählen ist. In diesem Fall wird in vorteilhafter Weise an dem Kolben Gewicht eingespart, da ein in Richtung der Kolbenachse größerer Bereich spanend, insbesondere drehend zu bearbeiten ist, um den Aufnahmebereich für den Positionierungskörper zu schaffen. Eine gezielte Beeinflussbarkeit der Schwerpunktslage des Kolbens wäre ein zusätzlicher Vorteil, wenn die Höhen der Positionierungskörper sich unterscheiden.

Wie erwähnt, werden besondere Vorteile für Positionierungskörper erwartet, die in einer Ebene senkrecht zur Kolbenachse kreisrund oder oval sind.

Ferner werden derzeit eine Anzahl von zwei, drei oder vier Positionierungskörper bevorzugt.

Im Hinblick auf die Vereinheitlichung der betroffenen Teile bietet es Vorteile, wenn sämtliche vorgesehenen Positionierungskörper identisch sind. Es sind jedoch auch Fälle denkbar, in denen für die beiden Schaftwände unterschiedliche Formen und/oder Anzahlen der Positionierungskörper eingesetzt werden.

Schließlich besteht eine bevorzugte Ausführungsform der Aufnahme darin, dass diese einen einzigen Träger und mehrere, hinsichtlich Form und/oder Abmessungen und/oder Höhe unterschiedliche Positionierungskörper aufweist, mit denen der Träger je nach Anforderung flexibel bestückt werden kann. Beispielsweise können asymmetrische, das heißt zwischen Druck- und Gegendruckseite unterschiedliche Schaftwände durch jeweils unterschiedliche Positionierungskörper aufgenommen werden.

### KURZE BESCHREIBUNG DER ZEICHNUNGEN

Nachfolgend wird die Erfindung anhand von beispielhaft dargestellten Ausführungsformen näher erläutert. Es zeigen:
- Fig. 1: eine Aufnahme mit vier Positionierungskörpern;
- Fig. 2: eine perspektivische Ansicht eines Positionierungskörpers;
- Fig. 3: eine Unteransicht eines Kolbens, der mithilfe der in Fig. 1 gezeigten Aufnahme definiert in einer Maschine angeordnet werden kann;
- Fig. 4: eine alternative Ausführungsform der Aufnahme;
- Fig. 5: eine weitere alternative Ausführungsform der Aufnahme ohne Positionierungskörper; und
- Fig. 6: eine weitere alternative Ausführungsform der Aufnahme mit einem aufgenommenen Kolben.

### AUSFÜHRLICHE BESCHREIBUNG BEVORZUGTER AUSFÜHRUNGSFORMEN DER ERFINDUNG

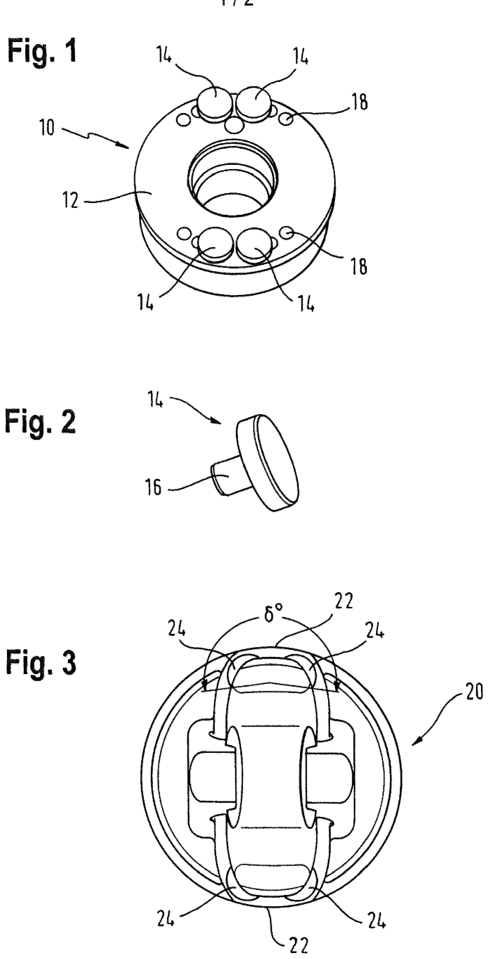

Wie in Fig. 1 zu erkennen ist, weist die Aufnahme 10 zum einen, einen im Wesentlichen kreisscheibenförmigen Träger 12, und zum anderen bei der gezeigten Ausführungsform vier Positionierungskörper 14 auf. Wie ergänzend aus Fig. 2 hervorgeht, sind die Positionierungskörper 14 im Wesentlichen kreisscheibenförmig mit einem Durchmesser, der deutlich kleiner ist, als derjenige des Trägers 12 sowie des aufzunehmenden Kolbens (vgl. Fig. 3). Die Positionierungskörper 14 sind, bevorzugt in ihrem Zentrum, mit einem zylindrischen Stift 16 versehen, mit dem sie in Öffnungen 18 einsetzbar sind, die in dem Träger 12 ausgebildet sind. Die dargestellte Ausführungsform des Trägers 12 weist zahlreiche Bohrungen oder zylindrische Öffnungen 18 auf, um mehrere Positionierungskörper 14 an unterschiedlichen Positionen aufnehmen zu können. In dem gezeigten Fall sind die Positionierungskörper 14 somit in vorteilhafter Weise austauschbar an dem Träger 12 angeordnet.

In Fig. 3 ist ein hierdurch aufzunehmender Kolben 20 zu erkennen, der vergleichsweise schmale Schaftwände 22 aufweist. Wie bereits aus Fig. 1 hervorgeht, erfolgt die Aufnahme des Kolbens 20 im Bereich jeder Schaftwand 22 durch zwei Positionierungskörper 14, mittels derer der Kolben 20 über typischerweise durch Drehen ausgebildeten Aufnahmeflächen 24 angeordnet wird. Der Winkelbereich δ, über den der Kolben an den Positionierungskörpern 14 aufgenommen werden kann, ist in vorteilhafter Weise besonders groß, nämlich im gezeigten Fall über 180 Grad, so dass eine besonders sichere Aufnahme erfolgt. Durch die Trennung in zumindest einen, bei dem gezeigten Beispiel zwei, Positionierungskörper an jeder Schaftwand ist zudem eine Verdrehung des Kolbens um die Kolbenachse (senkrecht zur Zeichenebene verlaufend) ausgeschlossen.

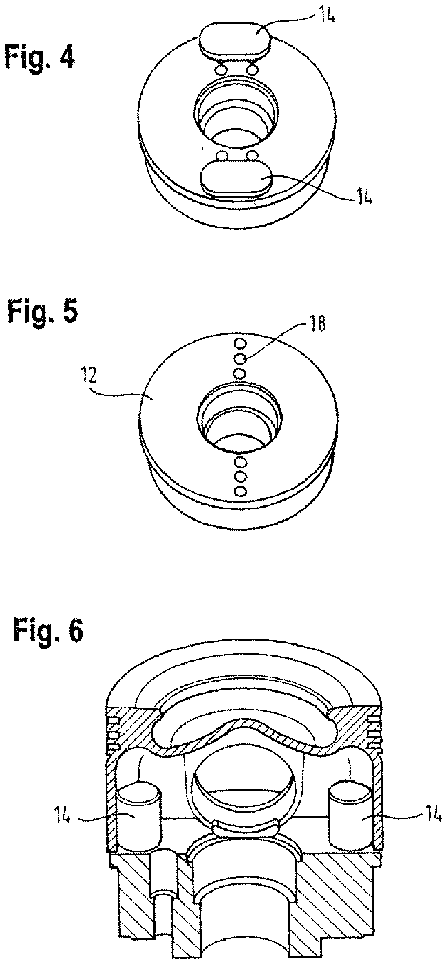

Bei der in der Fig. 4 gezeigten, alternativen Ausführungsform sind die Positionierungskörper 14 oval gestaltet und bieten im Wesentlichen die gleichen Vorteile.

Dies gilt ebenso für die in Fig. 5 gezeigte, weitere bevorzugte Ausführungsform, bei welcher der Träger 12 an jeder Seite Öffnungen 18 zur Aufnahme eines einzigen Positionierungskörpers gemäß Fig. 2 aufweist. Auch hierdurch kann jedoch bei vergleichsweise schmalen Schaftwänden eine sichere Positionierung und ein vergleichsweiser großer Winkel δ (vgl. Fig. 3) realisiert werden.

In Fig. 6 ist schließlich eine Ausführungsform gezeigt, bei der die Positionierungskörper 14 eine (in Richtung der Kolbenachse, das heißt in Fig. 6 von oben nach unten verlaufende) Höhe aufweisen, die beispielsweise größer ist als bei dem Positionierungskörper gemäß Fig. 2. Da für derart hohe Positionierungskörper umfangreiche Aussparungen in dem Kolben erforderlich sind, kann hierdurch Gewicht eingespart werden. Ferner erfolgt eine besonders sichere Positionierung. Weiterhin besteht die Möglichkeit der Schwerpunktsbeeinflussung des Kolbens.

## Patentansprüche

1. Kombination eines Kolbens (20) für einen Verbrennungsmotor mit einer Aufnahme (10) für den Kolben (20) zur Bearbeitung des Kolbens (20), wobei die Aufnahme (10) zumindest zwei Positionierungskörper (14) aufweist, die in einer Ebene senkrecht zur Kolbenachse eine definierte Auflagefläche und im Wesentlichen parallel zur Kolbenachse eine Anschlagfläche aufweisen, und für das Zusammenwirken mit Flächen (24) an dem Kolben (20) angepasst sind, und von denen zumindest einer zumindest eine senkrecht zur Kolbenachse verlaufende Abmessung aufweist, die kleiner ist als der Radius des zu bearbeitenden Kolbens (20).

2. Kombination nach Anspruch 1,
**dadurch gekennzeichnet, dass**
zumindest ein Positionierungskörper (14) fest mit einem Träger (12) verbunden, und vorzugsweise integral mit dem Träger (12) ausgebildet ist.

3. Kombination nach Anspruch 1,
**dadurch gekennzeichnet, dass**
zumindest ein Positionierungskörper (14) von einem Träger (12) lösbar ist.

4. Kombination nach einem der Ansprüche 2 oder 3,
**dadurch gekennzeichnet, dass**
der Träger (12) mehr Aufnahmeeinrichtungen, beispielsweise Öffnungen (18) zur Aufnahme von Positionierungskörpern (14) aufweist, als Positionierungskörper vorgesehen sind.

5. Kombination nach einem der vorangehenden Ansprüche,
**dadurch gekennzeichnet, dass**
zumindest ein Positionierungskörper (14) in Richtung der Kolbenachse eine Höhe aufweist, die flexibel wählbar ist.

6. Kombination nach einem der vorangehenden Ansprüche,
**dadurch gekennzeichnet, dass**
zumindest ein Positionierungskörper (14) in einer Ebene senkrecht zur Kolbenachse im Wesentlichen kreisrund oder oval ist.

7. Kombination nach einem der vorangehenden Ansprüche,
**dadurch gekennzeichnet, dass**
zwei, drei oder vier Positionierungskörper (14) vorgesehen sind.

8. Kombination nach einem der vorangehenden Ansprüche,
**dadurch gekennzeichnet, dass**
sämtliche vorgesehenen Positionierungskörper (14) identisch ausgebildet sind.

9. Kombination nach einem der vorangehenden Ansprüche, mit einem Träger (12) und mehreren, hinsichtlich Form und/oder Abmessungen und/oder Höhe unterschiedlichen Positionierungskörpern (14).

10. Verwendung einer Aufnahme (10) für einen Kolben (20) eines Verbrennungsmotors zur Bearbeitung des Kolbens (20), mit zumindest zwei Positionierungskörpern (14), die in einer Ebene senkrecht zur Kolbenachse eine definierte Auflagefläche und im Wesentlichen parallel zur Kolbenachse eine Anschlagfläche aufweisen, und für das Zusammenwirken mit Flächen (24) an dem Kolben (20) angepasst sind, und von denen zumindest einer zumindest eine senkrecht zur Kolbenachse verlaufende Abmessung aufweist, die kleiner ist als der Radius des zu bearbeitenden Kolbens (20), während einer Drehbearbeitung des Kolbens und/oder einer Bearbeitung einer Brennraummulde.

11. Verwendung nach Anspruch 10,
**dadurch gekennzeichnet, dass**
zumindest ein Positionierungskörper (14) fest mit einem Träger (12) verbunden, und vorzugsweise integral mit dem Träger (12) ausgebildet ist.

12. Verwendung nach Anspruch 10,
**dadurch gekennzeichnet, dass**
zumindest ein Positionierungskörper (14) von einem Träger (12) lösbar ist.

13. Verwendung nach einem der Ansprüche 11 oder 12,
**dadurch gekennzeichnet, dass**
der Träger (12) mehr Aufnahmeeinrichtungen, beispielsweise Öffnungen (18) zur Aufnahme von Positionierungskörpern (14) aufweist, als Positionierungskörper vorgesehen sind.

14. Verwendung nach einem der Ansprüche 10-13,
**dadurch gekennzeichnet, dass**
zumindest ein Positionierungskörper (14) in Richtung der Kolbenachse eine Höhe aufweist, die flexibel wählbar ist.

15. Verwendung nach einem der Ansprüche 10-14,
**dadurch gekennzeichnet, dass**
zumindest ein Positionierungskörper (14) in einer Ebene senkrecht zur Kolbenachse im Wesentlichen kreisrund oder oval ist.

16. Verwendung nach einem der Ansprüche 10-15
**dadurch gekennzeichnet, dass** zwei, drei oder vier Positionierungskörper (14) vorgesehen sind.

17. Verwendung nach einem der Ansprüche 10-16,
**dadurch gekennzeichnet, dass**
sämtliche vorgesehenen Positionierungskörper (14) identisch ausgebildet sind.

18. Verwendung nach einem der Ansprüche 10-17, **dadurch gekennzeichnet, dass** die Aufnahme (10) einen Träger (12) und mehrere, hinsichtlich Form und/oder Abmessungen und/oder Höhe unterschiedliche Positionierungskörper (14) aufweist.

## Claims

1. Combination of a piston (20) for an internal combustion engine with a holder (10) for the piston (20) used for machining the piston (20), wherein the holder (10) has at least two positioning bodies (14) which have a defined support surface in a plane perpendicular to the piston axis and a stop surface substantially parallel to the piston axis, and are adapted to interact with surfaces (24) on the piston (20), and at least one of which has at least one dimension perpendicular to the piston axis which is less than the radius of the piston (20) which is to be machined.

2. Combination according to claim 1,
**characterised in that**
at least one positioning body (14) is firmly connected with a carrier (12), and preferably formed integrally with the carrier (12).

3. Combination according to claim 1,
**characterised in that**
at least one positioning body (14) is detachable from a carrier (12).

4. Combination according to one of the claims 2 or 3,
**characterised in that**
the carrier (12) has more receiving devices, for example openings (18) for receiving positioning bodies (14), than the number positioning bodies provided.

5. Combination according to one of the preceding claims,
**characterised in that**
at least one positioning body (14) has a height in the direction of the piston axis which is flexibly selectable.

6. Combination according to one of the preceding claims,
**characterised in that**
at least one positioning body (14) is substantially circular or oval in a plane perpendicular to the piston axis.

7. Combination according to one of the preceding claims,
**characterised in that**
two, three or four positioning bodies (14) are provided.

8. Combination according to one of the preceding claims,
**characterised in that**
all of the provided positioning bodies (14) are identical in configuration.

9. Combination according to one of the preceding claims, with a carrier (12) and several positioning bodies (14) which differ in form and/or dimensions and/or height.

10. Use of a holder (10) for a piston (20) for an internal combustion engine used for machining the piston (20), with at least two positioning bodies (14) which have a defined support surface in a plane perpendicular to the piston axis and a stop surface substantially parallel to the piston axis, and are adapted to interact with surfaces (24) on the piston (20), and at least one of which has at least one dimension running perpendicular to the piston axis which is less than the radius of the piston (20) which is to be machined during a rotational machining of the piston and/or a machining of a combustion bowl.

11. Use according to claim 10,
**characterised in that**
at least one positioning body (14) is firmly connected with a carrier (12), and preferably formed integrally with the carrier (12).

12. Use according to claim 10,
**characterised in that**
at least one positioning body (14) is detachable from a carrier (12).

13. Use according to one of the claims 11 or 12,
**characterised in that**
the carrier (12) has more receiving devices, for example openings (18) for receiving positioning bodies (14), than the number positioning bodies provided.

14. Use according to one of the claims 10-13,
**characterised in that**
at least one positioning body (14) has a height in the direction of the piston axis which is flexibly selectable.

15. Use according to one of the claims 10-14,
**characterised in that**
at least one positioning body (14) is substantially circular or oval in a plane perpendicular to the piston axis.

16. Use according to one of the claims 10-15,
**characterised in that**
two, three or four positioning bodies (14) are provided.

17. Use according to one of the claims 10-16,
**characterised in that**
all of the provided positioning bodies (14) are identical in configuration.

18. Use according to one of the claims 10-17, **characterised in that** the holder (10) has a carrier (12) and several positioning bodies (14) which differ in form and/or dimensions and/or height.

## Revendications

1. Combinaison d'un piston (20) pour un moteur à combustion interne avec un logement (10) pour le piston (20) en vue de l'usinage du piston (20), dans laquelle le logement (10) présente au moins deux corps de positionnement (14) qui présentent une surface d'appui définie dans un plan perpendiculairement à l'axe de piston et une surface de butée sensiblement parallèlement à l'axe de piston, et qui sont adaptés à la coopération avec des surfaces (24) au niveau du piston (20), et dont au moins un présente au moins une dimension s'étendant perpendiculairement à l'axe de piston qui est plus petite que le rayon du piston (20) à usiner.

2. Combinaison selon la revendication 1,
**caractérisée en ce**
**qu'**au moins un corps de positionnement (14) est relié de manière fixe avec un support (12), et est de préférence réalisé de manière intégrée avec le support (12).

3. Combinaison selon la revendication 1,
**caractérisée en ce**
**qu'**au moins un corps de positionnement (14) est amovible par rapport à un support (12).

4. Combinaison selon l'une quelconque des revendications 2 ou 3,
**caractérisée en ce que**
le support (12) présente plus de dispositifs de logement, par exemple d'ouvertures (18) destinées au logement de corps de positionnement (14), qu'il n'y a de corps de positionnement prévus.

5. Combinaison selon l'une quelconque des revendications précédentes,
**caractérisée en ce**
**qu'**au moins un corps de positionnement (14) présente, dans la direction de l'axe de piston, une hauteur qui peut être choisie de manière flexible.

6. Combinaison selon l'une quelconque des revendications précédentes,
**caractérisée en ce**
**qu'**au moins un corps de positionnement (14) est sensiblement rond ou ovale dans un plan perpendiculairement à l'axe de piston.

7. Combinaison selon l'une quelconque des revendications précédentes,
**caractérisée en ce que**
deux, trois ou quatre corps de positionnement (14) sont prévus.

8. Combinaison selon l'une quelconque des revendications précédentes,
**caractérisée en ce que**
tous les corps de positionnement (14) prévus sont réalisés à l'identique.

9. Combinaison selon l'une quelconque des revendications précédentes, avec un support (12) et plusieurs corps de positionnement (14) différents au niveau de la forme et/ou des dimensions et/ou de la hauteur.

10. Utilisation d'un logement (10) pour un piston (20) d'un moteur à combustion interne en vue de l'usinage du piston (20), avec au moins deux corps de positionnement (14), qui présentent une surface d'appui définie dans un plan perpendiculairement à l'axe de piston et une surface de butée sensiblement parallèlement à l'axe de piston, et qui sont adaptés à la coopération avec des surfaces (24) au niveau du piston (20), et dont au moins un présente au moins une dimension s'étendant perpendiculairement à l'axe de piston qui est plus petite que le rayon du piston (20) à usiner, pendant un usinage au tour du piston et/ou un usinage d'une cavité de chambre de combustion.

11. Utilisation selon la revendication 10,
**caractérisée en ce**
**qu'**au moins un corps de positionnement (14) est relié de manière fixe avec un support (12), et de préférence est réalisé de manière intégrée avec le support (12).

12. Utilisation selon la revendication 10,
**caractérisée en ce**
**qu'**au moins un corps de positionnement (14) est amovible par rapport à un support (12).

13. Utilisation selon l'une quelconque des revendications 11 ou 12,
**caractérisée en ce que**
le support (12)
présente plus de dispositifs de logement, par exemple d'ouvertures (18) destinées au logement de corps de positionnement (14), qu'il n'y a de corps de positionnement prévus.

14. Utilisation selon l'une quelconque des revendications 10-13,
**caractérisée en ce**
**qu'**au moins un corps de positionnement (14) présente, dans la direction de l'axe de piston, une hauteur qui peut être choisie de manière flexible.

15. Utilisation selon l'une quelconque des revendications 10-14,
**caractérisée en ce**
**qu'**au moins un corps de positionnement (14) est sensiblement rond ou ovale dans un plan perpendiculairement à l'axe de piston.

16. Utilisation selon l'une quelconque des revendications 10-15,
**caractérisée en ce que**
deux, trois ou quatre corps de positionnement (14) sont prévus.

17. Utilisation selon l'une quelconque des revendications 10-16,
**caractérisée en ce que**
tous les corps de positionnement (14) prévus sont réalisés à l'identique.

18. Utilisation selon l'une quelconque des revendications 10 à 17,
**caractérisée en ce que** le logement (10) présente un support (12) et plusieurs corps de positionnement (14) différents au niveau de la forme et/ou des dimensions et/ou de la hauteur.
